Europäisches Patentamt

European Patent Office

Office européen des brevets

(19)

(11) Numéro de publication: **0 038 234**
**A1**

## DEMANDE DE BREVET EUROPEEN

(21) Numéro de dépôt: 81400466.9

(51) Int. Cl.³: **A 01 G 31/00, C 09 K 17/00**

(22) Date de dépôt: **25.03.81**

(30) Priorité: **15.04.80 FR 8008367**

(43) Date de publication de la demande: **21.10.81**
**Bulletin 81/42**

(84) Etats contractants désignés: **BE DE GB IT NL**

(71) Demandeur: **Gagneraud, Francis, 6, Avenue des Tilleuls, F-75016 Paris (FR)**

(72) Inventeur: **Gagneraud, Francis, 6, Avenue des Tilleuls, F-75016 Paris (FR)**

(74) Mandataire: **Cuer, André, CABINET CUER 30, rue de Léningrad, F-75008 Paris (FR)**

(54) **Substrats de cultures, essentiellement à base de produits tirés de laitiers métallurgiques.**

(57) L'invention a trait au domaine des substrats ou supports de cultures à mélanger au sol ou à utiliser comme milieu de développement pour les cultures hors sol.

On utilise du laitier bouleté expandé de haut-fourneau de granulométrie comprise entre 0 et 15 mm et ayant au moins 30% de porosité totale. Le laitier peut être additionné d'une matière acide, comme par exemple la tourbe pour tamponner le pH à 7. Avantageusement, le granulat de laitier est mélangé à des fibres minérales dont des fibres de laitier métallurgique, par exemple de composition modifiée pour avoir un indice de basicité ($B = CaO + MgO/SiO_2 + AlO_3$) compris entre 0,4 et 0,8.

Application à toutes cultures in situ ou hors sol.

1

La présente invention a trait au domaine des substrats de cultures ou produits utilisés soit tels quels comme sols artificiels soit comme supports d'éléments actifs, solides ou liquides, employés comme adjuvants pour les cultures dans le sol lui-même ou hors sol.

Depuis un certain nombre d'années, on assiste à un développement continu de jardins sur dalles ou autre support, par suite du souci de recherche d'un équilibre entre les masses de bâtiments et le domaine végétal. En outre, pour la réalisation de cultures délicates, on s'oriente vers la réalisation de sols artificiels confectionnés à partir de matières présentant des caractéristiques physiques et physiologiques appropriées.

Il a maintenant été trouvé que l'on pouvait avantageusement mettre en oeuvre comme substrat de culture soit hors sol soit en mélange avec ce dernier (par exemple de la terre) du laitier bouleté expansé tel que déjà connu pour d'autres usages.

On sait que, par expansion et dispersion du laitier de haut-fourneau en fusion sur tambour bouleteur, on obtient un granulat, par exemple celui commercialisé sous le nom de GALEX (marque déposée) qui se présente sous la forme de particules de granulométrie allant de 0 à 15 mm ayant un indice de sphéricité important et présentant au moins 30 %, généralement environ 50 %, de porosité totale (brevet français n°75.07832 du 13 Mars 1975)

Un tel granulat de laitier présente de nombreux avantages dans la nouvelle application considérée. Provenant d'une matière fondue à plus de 1400°C, il est exempt de tout germe et ne risque donc pas d'apporter des maladies et/ou des parasites aux diverses cultures. D'autre part, il ne présente aucune phyto-toxicité. Par ailleurs, étant donné la grande porosité ouverte du produit, le granulat de laitier expansé a la faculté d'absorber l'eau et les liquides nourriciers des plantes ainsi que de les restituer progressivement au fur et à mesure des besoins des plantations. Par suite de la structure alvéolaire du granulat de laitier, la masse volumique des grains est relativement peu élevée, de l'ordre de 1500 kg/m3, ce qui permet de diminuer la masse de substrat par unité de volume. D'autre part, les granulats ne présentant pas d'arêtes tranchantes, les risques de blessure des racines sont éliminés. Enfin, les granulats de laitier bouleté expansé permettent d'obtenir des milieux de cohésion réduite, facilitant l'aération des racines.

Conformément à un premier mode de réalisation, le granulat de laitier est utilisé seul, en mélange avec le sol dont on désire améliorer les caractéristiques. Du fait que la composition chimique du granulat est telle que le rapport CaO + MgO/SiO2 + A1203 est de l'ordre de 1, l'apport de granulat permet de tamponner le pH des sols qui sont trop acides ou trop basiques. En outre, le laitier contient des éléments secondaires et des oligo-éléments (MgO, soufre, manganèse, zinc, cuivre etc..) qui favorisent la croissance des plantes.

En pratique, lorsque le laitier bouleté expansé est mélangé au sol, les proportions pondérales respectives peuvent varier entre de larges limites mais sont généralement comprises entre 10 à 50 parties de laitier pour 100 parties de sol. Les classes granulométriques les plus courantes sont des types : 0 à 4 mm ; 0 à 10 mm et 4 à 10 mm. Dans le cas d'utilisation pour la confection de jardins sur dalles ou en conteneurs, le laitier bouleté expansé est avantageusement utilisé pour réaliser les couches drainantes.

Selon une autre forme de réalisation, le granulat de laitier est utilisé comme substrat de culture hors sol. L'irrigation par les solutions nutritives des plantes s'effectue facilement par suite de la perméabilité du lit et le développement des racines se fait sans difficulté. Dans le cas de certains types de solutions nutritives,il est parfois nécessaire de corriger le pH de substrat qui est généralement basique ; on peut alors ajouter à celui-ci une matière acide, comme par exemple de la tourbe.

Conformément à un perfectionnement de l'invention, intéressant dans le cas de cultures particulières qui nécessitent un substrat de grande cohésion et favorisant un développement intense des radicelles, le granulat de laitier bouleté expansé est mélangé à des fibres minérales ne présentant aucune phyto-toxicité comme par exemple : fibres de verre, fibres de basalte et autres fibres de roches naturelles ou artificielles obtenues par les procédés connus de centrifugation, soufflage ou combinaison de ces techniques.

Parmi les fibres minérales convenant tout particulièrement bien, il convient de citer les matériaux fibreux obtenus à partir de laitiers métallurgiques par les procédés analogues à ceux précités ou formés également au cours du traitement de bouletage donnant lieu au granulat de laitier expansé (voir par exemple les brevets français N°77.37968 et N°77.37969 du 16 décembre 1977).

Les proportions limites des mélanges de granulats et de fibres de laitiers varient généralement entre 30 à 90 % en masse des premiers pour 70 à 10 % en masse de fibres. En pratique, des mélanges de

3

60 % de granulat et de 40 % de fibres donnent généralement des résultats favorables mais il est évidemment possible de les ajuster en fonction des cultures.

Il a en outre été trouvé que les fibres de laitiers dont la composition chimique a été modifiée pour obtenir un indice de basicité : $B = CaO + MgO/SiO2 + Al2O3$ compris entre 0,4 et 0,8 permettaient d'obtenir des mélanges granulats + fibres dont le pH est moins élevé et qui permettent donc d'être substitués à la tourbe ou autre matière acide précitée.

Bien entendu, l'invention n'est pas limitée à ces modes de réalisation et s'étend à toutes les variantes incluses dans la portée des revendications qui suivent.

4

# REVENDICATIONS

1. Substrat de cultures caractérisé en ce qu'il est constitué par du laitier bouleté expansé de granulométrie 0 à 15 mm et présentant au moins 30 % de porosité totale.

2. Substrat selon la revendication 1, caractérisé en ce que le laitier est mélangé au sol pour en améliorer les caractéristiques, en des proportions pondérales de 10 à 50 parties pour 100 parties du sol.

3. Substrat selon la revendication 1, caractérisé en ce que le laitier est utilisé comme support de culture hors sol.

4. Substrat selon la revendication 3, caractérisé en ce que le laitier est additionné d'une matière acide du type tourbe.

5. Substrat selon l'une quelconque des revendications 1 à 4, caractérisé en ce que le laitier est mélangé à des fibres minérales.

6. Substrat selon la revendication 5, caractérisé en ce que le mélange contient en masse 30 à 90 parties de laitier bouleté expansé pour 70 à 10 parties de fibres minérales.

7. Substrat selon l'une quelconque des revendications 5 et 6, caractérisé en ce que les fibres minérales sont choisies dans le groupe : fibres de verre, fibres de basalte, fibres de roches naturelles ou artificielles.

8. Substrat selon l'une quelconque des revendications 5 et 6, caractérisé en ce que les fibres minérales sont constituées par des fibres de laitiers métallurgiques.

9. Substrat selon la revendication 8, caractérisé en ce que les fibres de laitiers ont un indice de basicité $B = CaO + MgO/SiO2 + Al2O3$ compris entre 0,4 et 0,8.

## DOCUMENTS CONSIDERES COMME PERTINENTS

| Catégorie | Citation du document avec indication, en cas de besoin, des parties pertinentes | Revendica-tion concernee |
|---|---|---|
| | FR - A1 - 2 436 758 (OSAKA CEMENT CO., LTD.)<br>* revendications 1, 2; pages 1 à 3 *<br>-- | 1,2 |
| P | Patents Abstracts of Japan<br>Vol. 4, No. 69, 22 Mai 1980<br>page 31C11<br>& JP - A - 55 - 34266<br>-- | 1,2 |
| P | Patents Abstracts of Japan<br>Vol. 4, No. 155, 29 Octobre 1980<br>page 42C29 | 1 |
| P | & JP - A - 55 - 99992<br>-- | |
| | DE - A - 2 057 945 (A/S ROCKWOOL)<br>* page 5, ligne 5 à page 9,<br>ligne 28 *<br>& FR - A - 2 068 634<br>-- | 7,8 |
| D | FR - B1 - 2 303 589 (ENTREPRISE GAGNERAUD PERE ET FILS)<br>-- | |
| D | FR - B3 - 2 411 807 (F. GAGNERAUD)<br>-- | |
| D | FR - B3 - 2 411 808 (F. GAGNERAUD)<br>---- | |

**CLASSEMENT DE LA DEMANDE (Int. Cl.³)**

A 01 G   31/00

C 09 K   17/00

**DOMAINES TECHNIQUES RECHERCHES (Int. Cl.³)**

A 01 G   9/10

A 01 G   31/00

C 09 K   17/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

| X | Le présent rapport de recherche a été établi pour toutes les revendications |
|---|---|

| Lieu de la recherche | Date d'achèvement de la recherche | Examinateur |
|---|---|---|
| Berlin | 30-06-1981 | SCHOFER |

**OEB Form 1503.1   06.78**